# EUROPÄISCHE PATENTANMELDUNG

(11) **EP 1 374 737 A1**
(43) Veröffentlichungstag der Anmeldung: **02.01.2004**
(21) Anmeldenummer: 03013610.5
(22) Anmeldetag: 16.06.2003
(51) Int. Cl.: A47B 96/20, F16B 12/46, F16B 12/26, A47B 87/02

(54) **Möbel- und Regalbausystem und dessen Verwendung**

(30) Priorität: 18.06.2002 DE 10227205
(71) Anmelder: Sauerwein, Matthias, D-64409 Messel (DE); Schick, Oliver, D-64409 Messel (DE)
(72) Erfinder: Sauerwein, Matthias, D-64409 Messel (DE); Schick, Oliver, D-64409 Messel (DE)

(57) **Zusammenfassung**

Die Erfindung betrifft ein oder mehrere geometrische Grundkörper sowie ein Möbel- und Regalbausystem und dessen Verwendung zur freien Gestaltung von Mobiliar, bevorzugt von Regalsystemen, wobei verschiedene, geometrische Möbelformen durch Platten, vorzugsweise aber rechtwinkelige geometrische Körper, die beispielsweise zu Kuben, Rechtkante und/oder Quadern, aber auch geometrischen Körper mit dreieckigen oder mehreckigen Flächen durch Klettbänder (B) und/oder ausschließlich Steckverbindungen (Q) zusammengefügt werden und miteinander kombiniert werden können, ohne das es der Zuhilfenahme von anderen starren Befestigungsmaterialen, wie z. B. Schrauben, Nägeln, Dübeln oder dergleichen aus Holz, Metall, Plastik oder sonstigen geeigneten Materialien bedarf.

## Beschreibung

Die Erfindung betrifft geometrische Grundkörper sowie Möbel- und Regalbausysteme und deren Verwendung zur freien Gestaltung von Mobiliar, wobei geometrische Grundkörper, wie Prismen, Pyramiden, Tetraeder, vorzugsweise aber rechtwinkelige, geometrische Möbelformen, wie beispielsweise Kuben, Rechtkante und/oder Quader, die auch optional durch einzelne Platten durch den Benutzer zusammengefügt werden können. Bevorzugt sind aber einzelne, fertige geometrische Grundkörper, wobei die zum einzelnen Grundkörper zusammengefügten Platten vom Hersteller bereits miteinander verklebt werden. Diese können dann durch wiederentfern- und zugleich wiederverwendbare Steck- und/oder Schnappverbinder und/oder Klettbänder untereinander verbunden und kombiniert werden, ohne das es der Zuhilfenahme von weiteren zusätzlichen starren Befestigungsmaterialen, wie z. B. Schrauben, Nägeln, Dübeln oder dergleichen aus Holz, Metall, Plastik oder sonstigen geeigneten Materialien bedarf.

Möbel- und Regalbausysteme sind in zahlreichen Varianten aus dem täglichen Hausgebrauch und dem kommerziellen Einsatz bekannt. In den meisten Fällen sind diese Systeme aus Holz, holzähnlichen Materialien, wie z. B. kunststoffbeschichteten Spanplatten, Metall oder Glas oder aus Kombinationen dieser Materialien gefertigt, die beispielsweise durch Schrauben, Bolzen, Dübel, Nägel, Steckverbindungen, eingeschobene Rückwände, Kreuzverstrebungen und/oder Kreuzbänder zusammengehalten bzw. stabilisiert werden.

Man muss dabei grundsätzlich zwei Gebrauchsvarianten unterscheiden. Die eine Variante betrifft stabile, komplette Möbel, die aus festen, z. B. verleimten, verzahnten oder verschraubten Bauteilen zusammengesetzt sind und nach Aufstellung nicht mehr ohne Beschädigung oder nur schwer, durch einen Fachmann (Schreiner), vollständig wieder zerlegt werden können. Solche Möbel sind in der Regel sehr solide und beständig und haben ein hohes Gewicht, so dass sie in Abhängigkeit von ihrer Größe nur schwer transportiert oder z. B. in einem Raum oder Haus umgruppiert werden können. Zudem können solche Möbel im Falle einer vorübergehenden oder auch längerfristigen Nichtbenutzung in keiner Weise platzsparend verstaut und zerlegt werden. Sie sind daher weder für einen flexiblen Einsatz an verschiedenen Örtlichkeiten, noch für eine Lagerung oder Aufbewahrung im abgebauten oder zerlegten Zustand geeignet. Ferner werden sie bei der vollständigen Zerlegung in Einzelbauteile (Möbelplatten) irreparabel zerstört und eine Wiederverwendung des Möbels ohne eine kostspielige Reparatur ist nicht möglich.

Bei der zweiten Gebrauchsvariante, die der vorliegenden Erfindung wesentlich näher kommt, werden die Möbel- oder Regalsysteme von dem Benutzer in zerlegtem oder abgebautem Zustand gekauft und in Eigenarbeit zusammengefügt und aufgestellt. Diese Art von Mobiliar kann wieder zerlegt werden, damit es platzsparend aufbewahrt und/oder transportiert werden kann, um den Standort zu ändern. Diese Variante wird vor allem von jungen Kunden genutzt, da sie preiswert, in gewissem Maße flexibel und zeitgerecht ist, dafür aber qualitative Defizite aufweist. Beispielsweise sind diese Systeme aus preiswertem Weichholz oder holzähnlichen Materialien, wie z. B. kunststoffbeschichteten Spanplatten aufgebaut, die durch Schrauben, Dübel, Nägel, eingeschobene Rückwände, Kreuzverstrebungen und/oder Kreuzbänder etc. zusammengehalten und stabilisiert werden. Bei der Demontage werden die Bohrungen und Führungen für die Befestigungsmaterialien, oder auch diese selbst, häufig beschädigt, so dass nach Wiederaufbau die Stabilität leidet und die ursprüngliche Form, Belastbarkeit und Gebrauchsfähigkeit nicht mehr erreicht werden kann. Es liegt also auch hier eine eingeschränkte Flexibilität vor, die den häufigen Standortwechsel verbietet. Zudem haben diese Materialien, die für derartige Möbel- und Regalsysteme verwendet werden, wie z. B. Weichholz-, Span- oder kunststoffbeschichtete Möbelbauplatten, ein hohes Eigengewicht und ermöglichen daher nur eine eingeschränkte Transportfähigkeit.

Die auf dem Markt befindlichen mulifunktionalen Möbel 4 move® bieten ebenfalls etwas Gestaltungsspielraum. Sie bestehen immer aus vier, nichtzerlegbaren starren (Sperr-) Holzkästen unterschiedlicher Größe, die sich in vorgegebener Weise miteinander zu einem Schreibtisch oder Stehpult kombinieren lassen. Das Möbel kann sich so vom Schreibtisch in ein Stehpult verwandeln und ist daher ein bedingt wandlungsfähiges Möbel.

Dieses bedingt verwandelbare Möbel ist für einen kleinen, elitären Kundenkreis bestimmt, der das Besondere liebt, erfüllt aber im Vergleich zu der vorliegenden Erfindung lediglich den Anspruch an ein zeitgemäßes Design und die Tatsache dass die rigiden Quader miteinander kombiniert werden können. Es handelt sich dabei um eine Hochpreis-Variante, mit dem Anspruch, ein Designermöbel zu sein.

Es ist daher wünschenswert, dem Verbraucher ein Möbel- und Regalbausystem bereitzustellen, welches die angesprochenen Nachteile nicht aufweist, insbesondere dauerhaft flexibel einsetzbar ist und schnell und problemlos stabil aufgebaut bzw. wieder abgebaut werden kann, ohne das es einer ausführlichen Aufbauanleitung oder verschraubbarer, starrer Befestigungsmaterialien dazu bedarf.

Die vorliegende Erfindung dient dazu diesen Mängeln, die herkömmliche Möbel- und Regalsysteme haben, Abhilfe zu schaffen und eine Verbesserung im Bereich der zuletzt genannten Variante bereitzustellen, die leichtgewichtig, formstabil, flexibel im Einsatz, häufig wieder auf- und abbaubar, platzsparend verstaut werden kann und dauerhaft einsetzbar ist, dabei aber gleichzeitig zeitgemäß, vom Design her ansprechend und neben den Klettbändern (B) und den Steckverbindungen (Q) oder ausschließlich mit den Steckverbindungen (Q), ohne Zuhilfenahme von weiteren starren, nur mit Werkzeugen entfernbaren Befestigungsmaterialen, wie z. B. Schrauben, Nägeln, Dübeln oder dergleichen aus Holz, Metall, Plastik oder sonstigen geeigneten Materialien oder anderer Stabilisatoren, die die Grundkörper untereinander verbinden, stabil aufgebaut werden kann und einer hohen Beanspruchung und Belastung standhält, ohne das es dazu einer Aufbauanleitung oder detaillierter Hinweise und Kenntnissen bedarf.

Die Art des Materials, dessen Beschichtung und Ausgestaltung zur Fertigung der Einzelbauteile des Möbel- und Regalbausystems ist dabei hinsichtlich seiner Bestimmung, der Anwendbarkeit und der Akzeptanz durch den Verbraucher unkritisch, sollte aber von geringem Gewicht sein. Es empfiehlt sich daher, die Einzelbauteile (Platten) aus Kunststoff, insbesondere vorzugsweise aus expandierbarem Polypropylen (EPP) zu verwenden, da dieses Material, unabhängig davon, ob es aus offen- oder geschlossenzelligem Schaum besteht, leichter als alle anderen Materialien ist, dabei aber gleichzeitig eine sehr hohe Festigkeit aufweist. Weitere, besonders vorteilhafte Materialien für das erfindungsgemäße Möbel- und Regalbausystem sind beispielsweise auch andere offene- oder geschlossenenzellige Schäume wie expandierbares Polystyrol (EPS) oder Polyurethan (PU), die sich für die erfindungsgemäßen Möbel verwenden lassen. Diese Materialbeispiele sind nicht vollständig und sollen die Erfindung näher beschreiben, ohne diese einzuschränken.

Zudem gibt es noch eine Reihe von weiteren Anforderungen, die das erfindungsgemäße Möbel- und Regalbausystem erfüllen muss.

So müssen beispielsweise folgende Eigenschaften vorhanden sein bzw. folgende zusätzlichen Anforderungen von dem System erfüllt werden:
- die Platten zum Aufbau des Möbel- und Regalbausystem müssen eine hohe Formstabilität, insbesondere Kantenstabilität aufweisen;
- es muss eine einfache und bequeme Handhabung gewährleistet sein, die es erlaubt, das System ohne Vorkenntnisse oder einen detaillierten Bauplan aufzustellen;
- ein kraftarmes, leichtes, aber stabiles Aufbauen und Transportieren muss gegeben sein;
- die Steck- oder Schnappverbindungen, welche die Grundkörper untereinander verbinden, müssen ohne Zuhilfenahme von Werkzeugen entfernt und eingesetzt werden können;
- das Möbel- und Regalbausystem soll vollständig, bis auf einzelne, flache Platten oder geometrische Grundkörper zerlegbar sein;
- es muss eine Gewährleistung für besonders hohe Belastbarkeit bieten, sowohl im Umgang und Handhabung, aber auch einer hohen Gewichtsbelastung standhalten;
- es muss eine einfache, aber gründliche Reinigung möglich und keinerlei Wartung notwendig sein;
- es muss eine hohe Flexibilität bei gleichzeitiger Formbeibehaltung (Steifigkeit) aufweisen;
- es soll eine lange Lebensdauer besitzen, die ein häufige Wiederverwendung bei zahlreichen Auf- und Abbauvorgängen gewährleistet;
- es soll eine universelle Einsetzbarkeit und direkte Verwendbarkeit, auch in Kombination mit anderen Möbeln oder Möbelteilen aufweisen;
- ein temperaturunabhängiger Einsatz unter Gewährleistung der Formstabilität muss ermöglicht werden.

Durch Erfüllung dieser Eigenschaften ergibt sich ein hochwertiges, gebrauchstechnisch einzigartiges, bisher nicht bekanntes Möbel- und Regalbausystem, welches das Marktangebot im Handel hervorragend ergänzt und bereichert.

Der vorliegenden Erfindung lag daher die Aufgabe zugrunde, eine im Aufbau einfaches und für den technischen Einsatz zweckmäßiges Möbel- und Regalbausystem bereitzustellen, welches leichtgewichtig, formstabil, flexibel im Einsatz, häufig wieder auf- und abbaubar und dauerhaft einsetzbar ist, und ohne Zuhilfenahme von Werkzeugen, lediglich durch wenige Steck- oder Schnappverbindungen und/oder in Kombination mit Klettbändern, ohne Benutzung weiterer starrer Befestigungsmaterialen, wie z. B. Schrauben, Nägeln, Dübeln oder dergleichen aus Holz, Metall, Plastik oder sonstigen geeigneten Materialien, stabil aufgebaut werden kann und einer hohen Beanspruchung und Belastung standhält, ohne das es dazu einer Aufbauanleitung oder detaillierten Hinweisen und/oder Kenntnissen bedarf, und somit sowohl für den privaten Bereich, aber auch für eine professionelle Verwendung, wie z. B. im Hotel- und Gaststättengewerbe, in Großküchen, Altenheimen, Krankenhäusern, Pflege- und Behindertenheimen, auf Messen, in Warenlagern und Großmärkten etc. eingesetzt werden kann und gleichzeitig dabei die genannten Nachteile des Standes der Technik nicht besitzt, aber die aufgezeigten Anforderungen zufriedenstellend und umfassend erfüllt.

Ein Möbel- und Regalbausystem, welches diesen Anforderungen gerecht wird, ist das mit dieser Erfindung beschriebene System zur freien Gestaltung von Mobiliar, insbesondere Regalsystemen, durch geometrische Grundkörper, wie z. B. Rechtkante, Kuben und/oder Quader, aber auch Tetraeder, Pyramiden, Prismen und andere Polyeder mit drei-, vier- oder auch mehreckigen, geometrischen Flächen, die zu dem gewünschten Möbel oder Regal zusammengefügt werden können, und dabei durch Steck- oder Schnappverbindungen oder aber Klettbänder und optional auch durch zusätzliche Schnappungen im Kanten- und Randbereich stabil zusammengehalten werden, ohne das es zusätzlich der weiteren Zuhilfenahme von starren Befestigungsmaterialen, wie z. B. Schrauben, Nägeln, Dübeln oder dergleichen aus Holz, Metall, Plastik oder sonstigen geeigneten Materialien zwingend bedarf. Es ist allerdings möglich, die so gestalteten geometrischen Körper auch durch Steck- und/oder Schnappverbindungen zu stabilisieren. Diese Ausführungsform ist gleichermaßen vorteilhaft und besonders bevorzugt.

Optional können die geometrischen Grundkörper, die normalerweise herstellerseits bereits gefertigt sind und als fester Baustein vom Benutzer verwendet werden, auch in einzelne Platten zerlegt werden oder aus diesen aufgebaut werden. Dies stellt eine zusätzliche Ausführungsform der Erfindung dar.

Gegenstand der Erfindung ist somit ein Möbel- oder Regalbausystem sowie ein geometrischer Grundkörper zur freien Gestaltung von Mobiliar, dadurch gekennzeichnet, dass geometrische Grundkörper sowie Möbel- und/oder Regalformen durch Platten, die über Klettbänder und Steck- oder Schnappverbindungsbolzen oder Steck- oder Schnappverbindungsbolzen alleine, und optional besonders ausgestaltete Ränder mit Schnappungen stabil zusammengefügt werden können, ohne dass es der zusätzlichen Zuhilfenahme von starren Befestigungsmaterialen, wie z. B. Schrauben, Nägeln, Dübeln oder dergleichen aus Holz, Metall, Plastik oder sonstigen geeigneten Materialien bedarf.

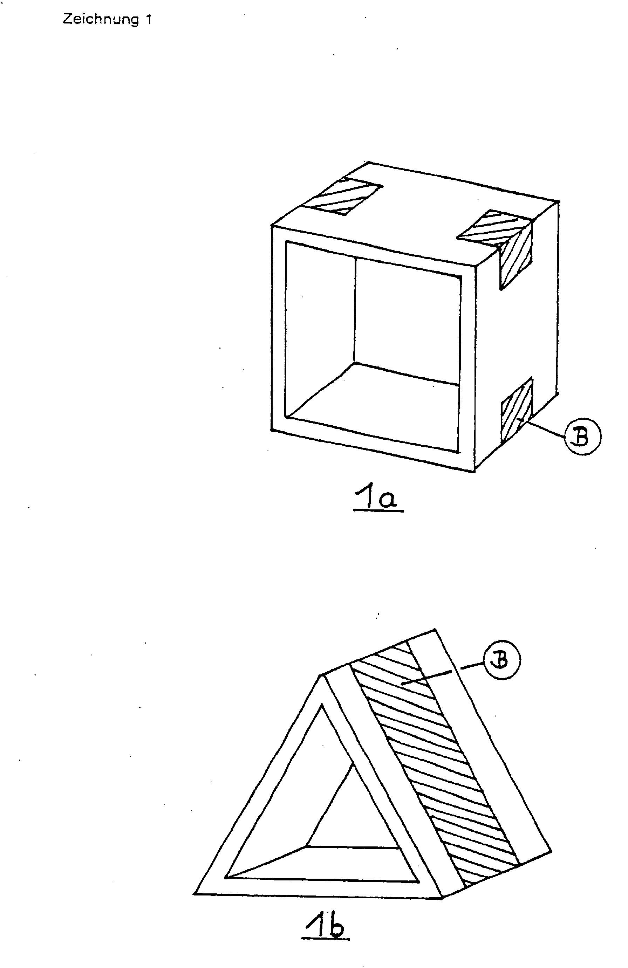

Die geometrischen Möbel- und Regalformen sind dabei in der Regel aus einzelnen geometrischen Körpern aufgebaut, die in zahlreichen verschiedenen Varianten und Formen miteinander kombiniert werden können und ebenso wie der jeweilige Einzelbaustein, also der geometrische Grundkörper, untereinander über Klettbänder und in einer besonders bevorzugten Variante zusätzlich durch Steck- undloder Schnappverbindungen gehalten werden. Besonders geeignete geometrische Einzelkörper sind Kuben, die an zwei Seiten offen sind, wobei sich die offenen Seiten vorzugsweise gegenüberliegen. Zwei mögliche Ausführungsbeispiele sind in Zeichnung 1 dargestellt. Zeichnung (1a) zeigt einen Kubus, der an zwei gegenüberliegenden Seiten offen ist und aus vier quadratischen Platten besteht, während Zeichnung (1b) ein Prisma mit zwei gegenüberliegenden offenen Seiten zeigt und aus drei viereckigen Platten besteht.

Dem Formenspektrum sind hier keine Grenzen gesetzt und die in Zeichnung 1 abgebildeten Beispiele sollen die Erfindung lediglich beschreiben, ohne diese jedoch einzuschränken. Weitere geometrische Körper, die hier verwendet und optional, in einer besonderen Ausführungsform der Erfindung, auch aus Einzelplatten aufgebaut werden können, sind z. B. das Rechtkant, die Pyramide oder der Tetraeder und andere ebenflächige Körper oder auch Polyeder.

Gegenstand der Erfindung ist somit auch ein geometrischer Grundkörper zum Aufbau eines Möbel- oder Regalsystem zur freien Gestaltung von Mobiliar, dadurch gekennzeichnet, dass der geometrische Grundkörper durch Platten, die über Klettbänder und optional durch besonders ausgestaltete Ränder mit Schnappungen stabil zusammengefügt werden können, ohne das es der zusätzlichen Zuhilfenahme von Werkzeugen oder von starren Befestigungsmaterialen, wie z. B. Schrauben, Nägeln, Dübeln oder dergleichen aus Holz, Metall, Plastik oder sonstigen geeigneten Materialien bedarf.

Der Auf- und Zusammenbau sowie Beispiele der verschiedenen möglichen Ausführungsformen, einschließlich der Schnappungen, der Gestaltung der Seitenränder und weitere notwendige und optionale Details, werden nachfolgend am Beispiel des Kubus (Würfel) exemplarisch gezeigt und beschrieben. Dies kann aber ebenso auf alle anderen geometrischen Formkörper direkt oder sinngemäß übertragen werden und soll die vorliegende Erfindung in keiner Weise einschränken

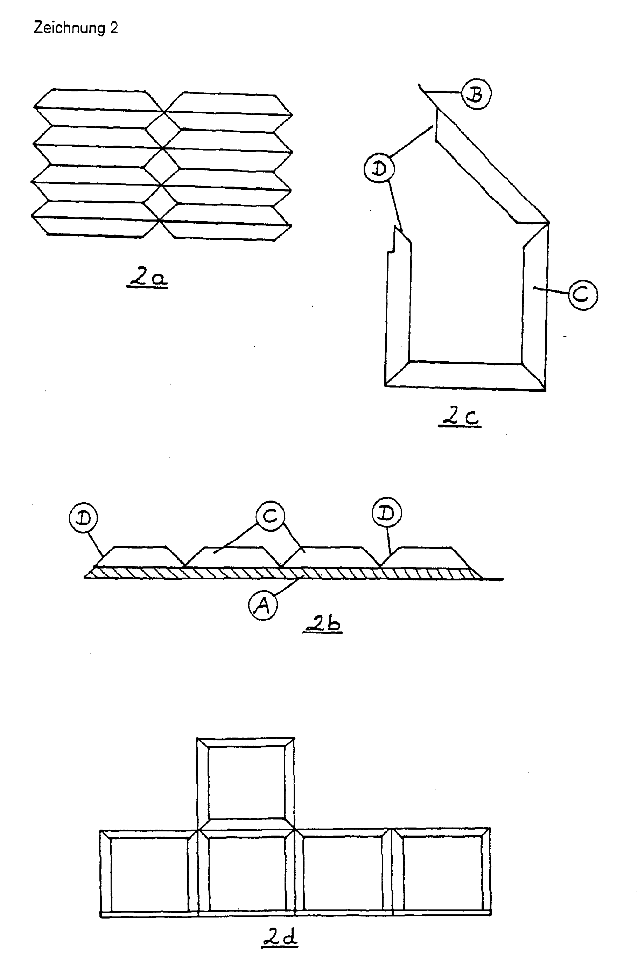

Zeichnung 2 zeigt in Teilabbildung (2a) die Stapelung eines Kubus im zerlegten Zustand, wie er z. B. zur Lagerung oder zum Transport geeignet ist. In diesem Beispiel (Teilabbildung (2b)) sind die vier Flächen bereits durch ein Filmscharnier (A), welches z. B. aus Folie, Textilgewebe, Kunststoff oder ähnlichem flexiblem Material oder aber direkt aus Klettband (B) bestehen kann, bzw. dieses Klettband zusätzlich an der Oberfläche besitzt, miteinander verbunden (Teilabbildung (2b)). Die schraffierte Fläche (C) in dieser Teilabbildung (2b) ist z. B. ein expandierbarer Schaum wie EPP, wobei die Seitenränder (Kanten) (D), die beim Zusammenbau gegeneinander geklappt werden, hier in diesem Ausführungsbeispiel im Winkel von 45° abgeschrägt sind, um dann beim Zusammenklappen (Teilabbildung (2c)) einen regelmäßigen Kubus zu ergeben.

Das verwendete Klettband (B) ist ein handelsübliches Produkt und kann z. B. die gesamte Oberfläche oder auch nur Teile davon bedecken. Es kann direkt als Filmscharnier (A) eingesetzt werden oder aber auf dieses zusätzlich aufgebracht werden, wobei ein sogenanntes "One-Face-Klettband" mit Haken (E) und Flausch (F) auf demselben Band (Zeichnung (3a)) oder auch getrennt mit Haken (E) und Flausch (F) auf verschiedenen Bändern (Zeichnung (3b)) verwendet werden kann. Das Klettband kann Teile des geometrischen Körpers umgeben und beispielsweise die Kanten zweier benachbarter äußeren Oberflächen umschließen, wobei die Lasche des Klettbandes, wie in Zeichnung (3c) gezeigt, flächenbündig abschließt. Es ist jedoch besonders vorteilhaft, wenn das Klettband den gesamten Würfel umgibt und Haken- (E) und Flauschteil (F) des Klettbandes, auf einem Band oder auf getrennten Bändern befindlich, sich auf jedem Kubus befinden, damit diese beliebig miteinander zu Möbel- oder Regalsystemen kombiniert werden können. Unabhängig von der Natur des Klettbandes, weist diese Konstruktion, d. h. die Stabilisierung des aufgebauten Formkörpers und der daraus resultierenden Möbel- und Regalsysteme durch Klettbänder, aufgrund der hohen Haftkraft der Klettbänder eine derart große Stabilität auf, dass auf zusätzliche stabilisierende Maßnahmen verzichtet werden kann. Es werden hier beispielsweise keine zusätzlichen Befestigungsmaterialen, wie z. B. Schrauben, Steckbolzen, Schnappverbinder, Nägel, Dübel, Kreuzverstrebungen oder dergleichen zwingend benötigt. Möbel- und Regalsysteme gemäß der vorliegenden Erfindung, die sich trotzdem dieser zusätzlichen Stabilisatoren oder Befestigungsmaterialien bedienen, sind aber dennoch von der Erfindung eingeschlossen und als äquivalent anzusehen.

Die bevorzugte Variante ist der beidseitig offene Kubus, mit den offenen Seiten jeweils gegenüberliegend. Bei Bedarf kann dieser mit einer Rückwand ausgestattet werden. In der zusammenklappbaren Form des Grundkörpers, kann diese direkt an das planare System gemäß Zeichnung (2b) seitlich angefügt sein (Zeichnung (2d)), so dass eine der offenen Seiten verschlossen werden kann, wobei es sich empfiehlt, auch hier die vier Kanten der Rückseite im 45°-Winkel derart abzuschrägen, dass diese sich in die ebenfalls um 45° abgeschrägten Kanten der Seite, die verschlossen werden soll, bündig einsetzen lässt. Ebenso kann diese Rückseite separat eingesetzt werden, ohne direkt an den vier Flächen angebracht zu sein. Hierdurch werden die optischen Gestaltungsmöglichkeiten erhöht und der jeweilige Kubus lässt sich damit vielfältiger und universal einsetzen. In einer weiteren nicht-abgebildeten Variante ist es auch möglich, dass der Kubus, oder jeder andere gewünschte geometrische Körper, aus einzelnen Flächen zusammengesetzt wird, wobei auch dabei der Verbund der Platten untereinander über Klettbänder erreicht wird. Es ist bevorzugt, auch hier die Seitenränder (Kanten) die gegeneinander gesetzt werden auf Gehrung zu arbeiten, wobei im Fall des Kubus ein 45° Winkel einzuhalten ist, während dies beim Prisma z. B. 60° Winkel sind, und für andere geometrische Körper entsprechend geändert werden müssen und nach mathematischen Gesichtspunkten auszuwählen sind.

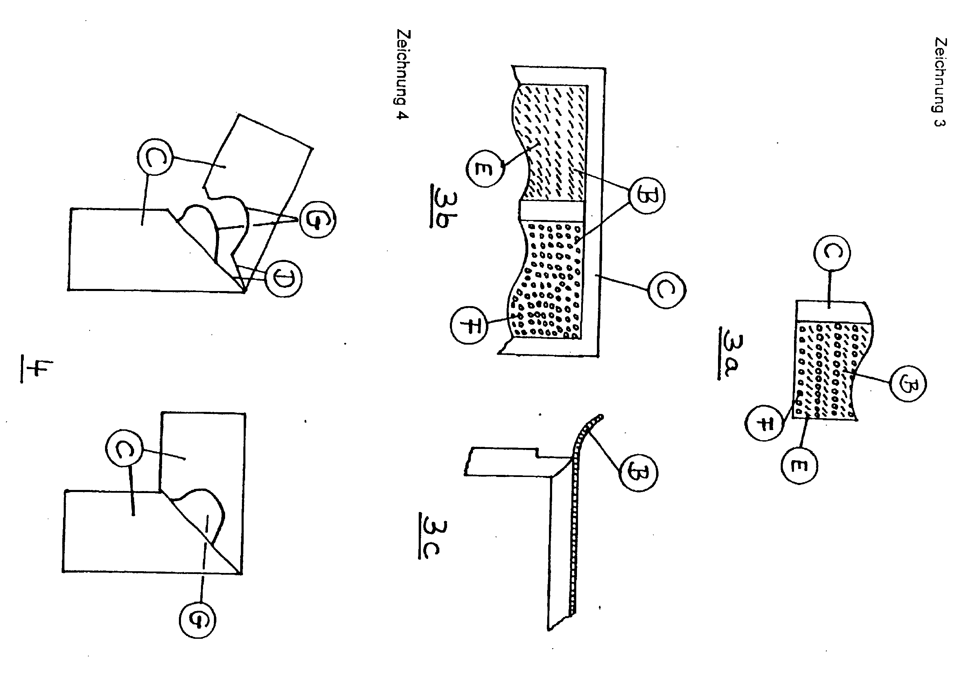

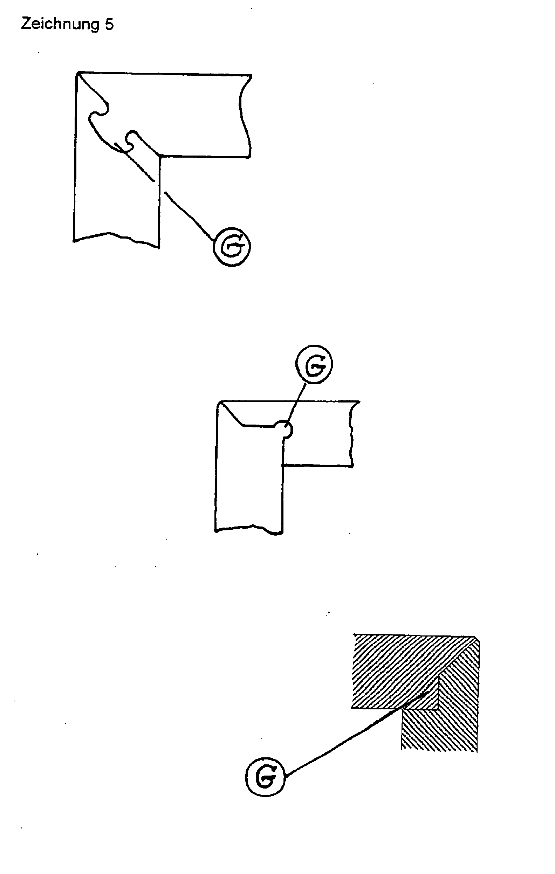

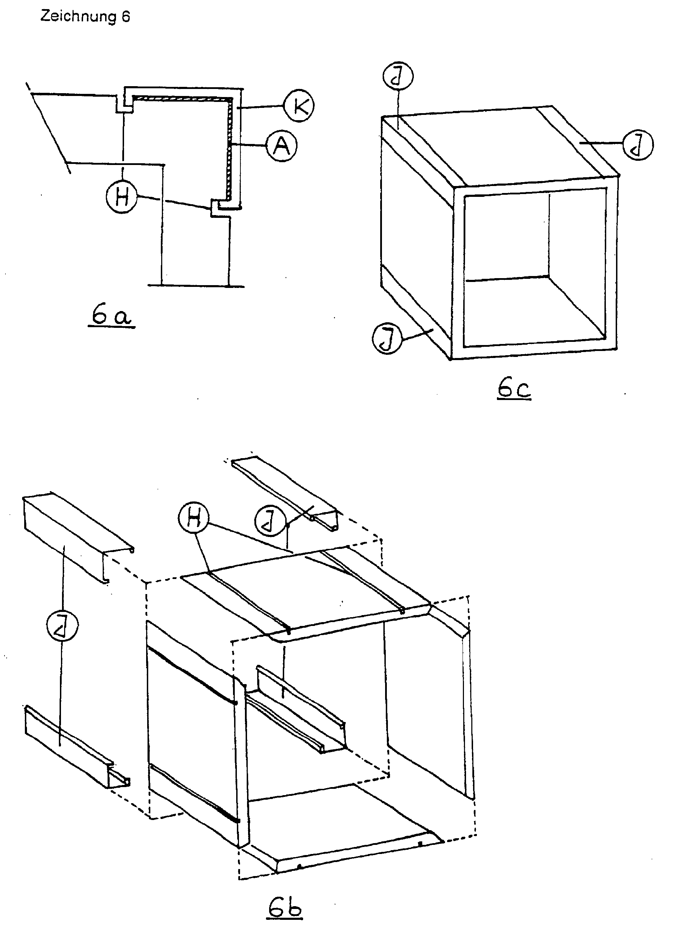

In einer besonderen Ausführungsform können im Bereich der abgeschrägten Kanten (D) Schnappungen (G), wie in Zeichnung (4) gezeigt, integriert werden. Diese Schnappung führt dann beim Zusammenklappen, also beim Aufbauen, zu einer zusätzlichen Verzahnung und erhöht damit die Stabilität des entstehenden Kubus oder jeder anderen gewählten geometrischen Form. Die Schnappungen können verschiedene Formen haben. Einige Beispiele von Schnappungen sind in Zeichnung 5 gezeigt.

Gegenstand der Erfindung ist ferner ein Möbel- und Regalbausystem oder ein geometrischer Grundkörper zur freien Gestaltung von Mobiliar, dadurch gekennzeichnet, dass die Platten, die über Klettbänder und besonders ausgestaltete Ränder zu geometrischen Grundkörpern stabil zusammengefügt werden, zusätzlich an ihren Rändern bzw. Kanten Schnappungen aufweisen, die beim Aufbau ineinander greifen und eine zusätzliche Stabilität durch diese Verzahnung ergeben.

Bei einer weiteren bevorzugten Ausführungsform weist der jeweilige geometrische Grundkörper, der zum Aufbau eines komplexen Möbel- oder Regalsystems eingesetzt werden kann, auf jeder Platte eine Nut (H) auf der äußeren Oberfläche auf, die ca. 1 bis 10 cm, vorzugsweise 2 bis 7 cm, besonders bevorzugt 3 bis 5 cm vom äußeren Rand, wie in Zeichnung (6a) gezeigt, entfernt ist. Diese Nut (H) hat vorzugsweise eine L-Form oder eine spiegelbildliche L-Form und durchquert die gesamte Platte parallel zum Filmschamier (A). In diese Nut (H) kann nach dem Aufbau eines geometrischen Grundkörpers, ein Steckprofil (J) oder ein Einsteckwinkel eingeschoben werden, wie dies in Zeichnung (6b) gezeigt ist. Das Steckprofil (J) sorgt für die Stabilisierung des Grundkörpers und ersetzt in der Regel das Klettband zur Festigung der vier Platten eines Kubus oder der Platten eines anderen geometrischen Grundkörpers. Die zusammengebaute Form ist am Beispiel eines zweiseitig offenen Kubus in Zeichnung (6c) gezeigt. Diese bevorzugte Ausführungsform besitzt jedoch an den außenliegenden Oberflächen ebenfalls handelsübliche Klettbänder mit hoher Adhäsionskraft zum festen Verbund der geometrischen Körper untereinander, wenn diese zu einem Möbel- oder Regalsystem zusammengefügt werden.

Gegenstand der Erfindung ist demnach auch ein Möbel- und Regalbausystem zur freien Gestaltung von Mobiliar, dadurch gekennzeichnet, dass der jeweilige geometrische Grundkörper, der zum Aufbau eines komplexen Möbel- oder Regalbausystems eingesetzt wird, auf jeder Platte eine Nut (H) auf der äußeren Oberfläche besitzt, die die gesamte Platte parallel zum Filmscharnier (A) durchquert, wobei in diese Nut (H) nach dem Aufbau eines geometrischen Grundkörpers, ein Steckprofil (J) oder ein Einsteckwinkel (K) zur besonderen Stabilisierung des Grundkörpers und/oder der Kanten eingeschoben werden kann.

Bei einer anderen Ausführungsform weist der jeweilige geometrische Grundkörper, der zum Aufbau eines komplexen Möbel- oder Regalbausystems eingesetzt werden kann, in oder auf jeder Platte ein oder mehrere Horizontalprofile (L) sowie entsprechende Vertikalprofile (M) auf, die auf die Horizontalprofile die auf ihnen lastende Kraft abtragen können, und/oder Stützprofile (N) auf. Die Horizontal- und Vertikalprofile (L) und (M) sind vorzugsweise auf der innenliegenden Oberfläche, parallel zur Stimseite und senkrecht zu den Filmscharnieren (A), oder an dem Rand der Stirnseiten der äußeren oder innenliegenden Oberfläche angeordnet, wie in Zeichnung (7a) gezeigt, während die Stützprofile (N), die ca. 1 bis 10 cm, vorzugsweise 2 bis 7 cm, besonders bevorzugt 3 bis 5 cm vom äußeren Rand, wie in Zeichnung (7b) gezeigt, entfernt sind, und sich auf der innenliegenden Oberfläche befinden. Diese Stützprofile (N) haben vorzugsweise eine T- oder U-Form (Zeichnung (7c)) und durchqueren die gesamte Platte, vorzugsweise senkrecht zum Filmscharnier (A). Diese Stütz- und/oder Horizontal- und Vertikalprofile sorgen für eine besondere Stabilisierung der Flächen des Grundkörpers und erhöhen die Belastbarkeit eines jeden einzelnen Formkörpers und somit auch eines daraus aufgebauten Möbel- oder Regalsystems erheblich.

Die zusammengebaute Form ist am Beispiel eines unzweiseitig offenen Kubus in Zeichnung (7a) gezeigt. Diese bevorzugte Ausführungsform besitzt jedoch an den außenliegenden Oberflächen ebenfalls handelsübliche Klettbänder mit hoher Adhäsionskraft zum festen Verbund eines jeden geometrischen Körpers und der Formkörper untereinander, wenn diese zu einem Möbel- oder Regalsystem zusammengefügt werden.

Eine besonders bevorzugte Ausführungsform besteht darin, dass ein fester geometrischer Grundkörper, z. B. ein Kubus, der herstellerseits verklebt ist, über ein eingestecktes Metallprofil, vorzugsweise Aluminium, als Stützprofil (N), wie in Zeichnung (8a) gezeigt, zur Stabilisierung verfügt. Das Besondere hieran ist, dass z. B. alle vier Seiten des zweiseitig offenen Kubus diese Profile aufweisen, wobei die Horizontalprofile (O), gemäß Zeichnung (8b) vorzugsweise auf den Vertikalprofilen (P) aufliegen und so die von oben wirkenden Kräfte bei Belastung seitlich abgetragen werden. Die Metallprofile können so vorgesehen sein, dass sie vom Benutzer eingesetzt werden, oder aber sind vorzugsweise fest in das Material, z. B. den EPP-Schaum integriert und von außen sichtbar oder nicht sichtbar. Dies ist insbesondere bei rigide vorgegebenen geometrischen Grundkörpem der Fall, die aus fest verklebten Einzelplatten aufgebaut sind.

Die geometrischen Grundkörper, die herstellerseits verklebt und somit nicht zum weiteren Zerlegen vorgesehen sind, weisen ebenfalls vorzugsweise Verzahnungen, sogenannte Schnappungen (G) auf, wie sie in Zeichnung 5 gezeigt sind. Derartige Verzahnungen in den auf Gehrung zusammengefügten Platten erhöhen die Stabilität der Klebeflächen und somit die Lebensdauer des Formkörpers erheblich.

Gegenstand der Erfindung ist demnach auch ein Möbel- und Regalbausystem oder ein geometrischer Grundkörper zur freien Gestaltung von Mobiliar, dadurch gekennzeichnet, dass der jeweilige geometrische Grundkörper, der zum Aufbau eines komplexen Möbel- oder Regalbausystems eingesetzt wird, auf jeder Platte ein oder mehrere Horizontalprofite (L) sowie entsprechende Vertikalprofile (M) aufweist, so dass die Horizontalprofile die auf ihnen lastende Kraft abtragen können, wodurch eine besondere Stabilisierung des Grundkörpers zur hohen Gewichtsbelastung erreicht wird.

Gegenstand der Erfindung ist ferner auch ein Möbel- und Regalbausystem oder ein geometrischer Grundkörper zur freien Gestaltung von Mobiliar, dadurch gekennzeichnet, dass der jeweilige geometrische Grundkörper, der zum Aufbau eines komplexen Möbel- oder Regalbausystems eingesetzt wird, auf jeder Platte ein oder mehrere Stützprofile (N) aufweist, wodurch eine besondere Stabilisierung des Grundkörpers zur hohen Gewichtsbelastung erreicht wird.

Gegenstand der Erfindung ist auch ein Möbel- und Regalbausystem oder ein geometrischer Grundkörper zur freien Gestaltung von Mobiliar, dadurch gekennzeichnet, dass diese durch Horizontal- und Vertikalprofile stabilisiert werden, und durch besonders ausgestaltete Ränder mit entsprechenden Verzahnungen oder Schnappungen, die ineinander greifen, eine zusätzliche Stabilität ergeben.

Der erfindungsgemäße geometrische Grundkörper zum Errichten der Möbel- oder Regalsysteme ist vorzugsweise ein zweiseitig offener Kubus, dessen Form aber auch andere beliebige Gestalten annehmen kann. So kann der Grundkörper beispielsweise würfel-, quader- oder prismenförmig sein, aber auch pyramidenförmig, tetraedrisch oder auch polyedrisch sein. Jede beliebige Form ist denkbar, so dass die zuvor angegebenen Formen zwar die vorliegende Erfindung beschreiben, aber in keiner Weise einschränken sollen.

Die erfindungsgemäßen geometrischen Körper, wie z. B. Kuben, Prismen Pyramiden und dergleichen, vorzugsweise aus offen- oder geschlossenzelligem -Schaum bestehend, können zu verschiedenen Möbeln oder zu Regalen zusammengefügt werden. Der Phantasie sind dabei keine Grenzen gesetzt. Es können somit gleiche oder unterschiedliche geometrische Formen kombiniert werden. Im folgenden werden die Möbel- und Regalsysteme wiederum exemplarisch am Beispiel der Kuben und einem Regalsystem beschrieben, ohne jedoch hierdurch die Erfindung und deren Verwendbarkeit einzuschränken oder zu begrenzen.

Die Kuben sind in der Regel ein- oder beidseitig offen, wobei vorzugsweise die beiden gegenüberliegenden Seiten geöffnet sind, sofern eine zweiseitig offene Variante gewählt wird. Das bevorzugte Material zur Herstellung besonders leichtgewichtiger Kuben ist expandierbares Polypropylen (EPP). Dieser geschäumte Kunststoff kann sowohl eine offenzellige als auch eine geschlossenzellige Beschaffenheit besitzen und ist leichter als alle anderen Materialien die üblicherweise zum Bau von Regalen verwendet werden (Holz, Metall, Glas, etc.). Weitere geeignete Materialien können vorzugsweise auch andere offen- oder geschlossenzellige Kunststoffe, bevorzugt schäumbare Kunststoffe, wie expandierbares Polystyrol (EPS) oder Polyurethane (PU), sein, die ebenfalls stabile, formbeständige, belastbare, häufig wiederverwendbare, strapazierfähige, Objekte zum Aufbau der erfindungsgemäßen Möbel- und Regalbausysteme ergeben.

Gegenstand der Erfindung ist somit auch ein Möbel- und Regalbausystem in Leichtbauweise, dadurch gekennzeichnet, dass die Platten, welche die geometrischen Grundkörper, wie z. B. Kuben, Prismen, Rechtkante oder dergleichen aufbauen, aus geschäumten Kunststoffmaterialien gefertigt sind, sowie Möbel- und Regalbausysteme, bei denen das eingesetzte Kunststoffmaterial vorzugsweise expandierendes Polypropylen (EPP) ist.

Durch die hohe Festigkeit des Schaums können auch schwere Gegenstände in die Kuben eingestellt werden und es ist somit ein hochbelastbares, voll funktionstüchtiges Möbel konstruierbar, wie es auch im professionellen Warenlagerbereich oder auf Messen und Ausstellungen benötigt wird. Durch die Konstruktion der Kuben kann bei Transport und Lagerung wertvoller Platz eingespart werden (Zeichnung (2a)). Das geringe Gewicht des Materials ermöglicht den häufigen Transport, wechselnde Lagerung, und ständigen Auf- und Abbau bei häufig wechselnden Einsatzorten, wie es bei der professionellen Anwendung gewünscht wird. Der Gegensatz von leichten Materialien, wie z. B. EPP-Schaum und die gleichzeitig erzielbare hohe Stabilität ist überraschend und bislang für solche Möbel- und Regalsysteme unbekannt.

Die erfindungsgemäßen Grundkörper und die daraus entstehenden Möbel- und Regalbausysteme können ohne Einschränkung hinsichtlich ihrer Form, manuell, ohne Zuhilfenahme von Werkzeugen auf- und abgebaut werden. Der benötigte Kraftaufwand hierzu ist minimal. Eine einfache und sichere Handhabung ist dadurch ebenfalls gewährleistet. Man benötigt weder eine detaillierte Anleitung, noch irgendwelche anderen Hinweise zu deren Auf- oder Abbau.

Um dem Regal Stabilität zu geben und dem Nutzer des Regals einen möglichst großen kreativen Freiraum beim Aufbauen des Regals zu ermöglichen, werden die einzelnen Kuben und Quader untereinander in einer der möglichen Ausführungsformen mit Klettband verbunden und durch Schnapp- oder Steckverbinder miteinander verbunden. Das Klettband wird bei der Fertigung der Kuben aufgebracht, vorzugsweise aufgeklebt, wobei z. B. ein Kubus immer mit der Flauschseite des Klettbandes versehen ist und der nächste mit der Hakenseite. Alternativ hierzu können auch beide komplementären Klettband-typen auf einen geometrischen Formkörper aufgebracht werden, wodurch, jeder Grundkörper universell eingesetzt werden kann und nicht zwischen einem Baustein mit Flauschklettband und einem anderen mit Hakenklettband unterschieden werden muss. Dies ist insbesondere bei der Anwendung im Profibereich erwünscht, um Zeit bei dem Aufbau zu sparen. Die besonders bevorzugte Variante ist jedoch die, wo ein sogenanntes "One-Face-Klettband" (Zeichnung (3a)) eingesetzt wird.

Bei einer anderen Ausführungsform wird auf das die geometrischen Grundkörper miteinander verbindenden Klettbands verzichtet und stattdessen nur Schnapp- oder Steckverbinder verwendet. Typische Formen von Schnapp- und Steckverbindem sind in Zeichnung (9a) zu sehen. Sie sind vorzugsweise gedreht oder spritzgegossen und bestehen vorzugsweise aus Kunststoff, aber auch andere Formen als die gezeigten oder ebenso andere Materialien sind möglich. Die Schnapp- oder Steckverbindungen (Q) können bevorzugt auf allen Seiten per Hand in die vorgesehenen Löcher mit Hinterschneidungen (R), wie in Zeichnung (9b) gezeigt, eingedrückt werden. Es sind hierfür je Fläche eines geometrischen Grundkörpers mindestens zwei Öffnungen für Schnapp- oder Steckverbindungen vorgesehen. Es können aber auch mehr als zwei solcher Öffnungen vorhanden sein, der Effekt wird dadurch aber nicht verändert oder verbessert. Ein Minimum von zwei Öffnungen ist notwendig, um ein seitliches Verdrehen zweier miteinander verbundener Grundkörper zu verhindern. Dennoch sollen auch die Varianten mit einer Öffnung je Seite und solche, die nicht auf allen Seiten Öffnungen besitzen, von der vorliegenden Erfindung mit eingeschlossen werden.

Durch die Schnapp- oder Steckverbindungen können die geometrischen Grundkörper auf allen Seiten aneinander befestigt und beliebig zusammengesteckt werden. Die Schnapp- oder Steckverbinder aus Kunststoff, Metall oder Holz schaffen eine feste Verbindung zum benachbarten Grundkörper und können ohne Zuhilfenahme von Werkzeugen zusammengefügt und auch wieder getrennt werden. Die zusammengefügte Variante zweier benachbarter Flächen von zwei geometrischen Grundkörpern mittels Steckverbindung ist in Zeichnung (9c) gezeigt. Wie in den Zeichnungen (9) beispielhaft dargestellt, ist es für die Stabilität besonders günstig, wenn die Öffnungen für die Schnapp- und Steckverbindungen so vorgesehen sind, dass sie das stabilisierende Metallprofil (N) umgeben, vorzugsweise derart, dass das Stützprofil (N) die kreisförmige Fläche der Steckverbindung maximal, also im Durchmesser, durchschneidet.

Die Erfindung betrifft außerdem ein Möbel- und Regalbausystem oder einen geometrischer Grundkörper zur freien Gestaltung von Mobiliar, dadurch gekennzeichnet, dass sie aus Materialien, vorzugsweise Kunststoffen, besonders bevorzugt expandierbare Kunststoffmaterialien in Form von schäumbaren Materialien, wie z. B. expandierbares Polypropylen (EPP), expandierbares Polystyrol (EPS) oder Polyurethane (PU), gefertigt sind, welche wasch-, aber auch spülmaschinenfest und hitzebeständig sind und zudem eine geringe Wärmeleitfähigkeit besitzen, so dass sie sich selbst bei großer Hitze, wie z. B. im Sommer oder bei der dauerhaften Bestrahlung mit Scheinwerfern, oder bei extremer Kälte in Kühlräumen oder in entsprechenden Transportfahrzeugen nur geringfügig erwärmen oder abkühlen und sich nicht verformen, ausdehnen oder zusammenziehen. Die Möbel- und Regalbauteile können bei einer Verschmutzung auf einfache Weise gereinigt werden. Hierdurch werden auch sehr hohe hygienischen Anforderungen im professionellen Einsatz, insbesondere bei einer Benutzung in Altenheimen, Krankenhäusern, Behindertenheimen Haftanstalten oder anderen öffentlichen Einrichtungen in ausreichendem Maße erfüllt.

Die geometrischen Grundkörper, hier am Beispiel von Kuben beschrieben, können auf unterschiedliche Weise aufgebaut und gefertigt werden. Daraus ergeben sich 3 bevorzugte Haupttypen von geometrischen Körpern als Grundbausteine zum Aufbau der Möbel und/oder Regale:

Bei der ersten Variante werden die vier Platten des Kubus einzeln gefertigt und nach ihrer Produktion mit einer textilen oder folienartigen Beschichtung, vorzugsweise auf einer Flächenseite, versehen, die als Filmscharnier (A) dient.

Dieser Rücken trägt dann zur Verbindung der Kuben untereinander ein Klettband mit einer Flausch- und/oder Hakenseite. Zur Benutzung bei der Gestaltung von Möbel- oder Regalsystemen faltet man die 4 Seiten, unterstützt durch das Filmscharnier, zusammen und verschließt den Kubus mittels Klettverschluß, wobei in diesem Fall der beidseitig offene Kubus entsteht. Dies ist in Zeichnung (1a) und Zeichnung (2c) gezeigt.

Bei einer zweiten Ausführungsform werden die vier Seiten des Kubus ebenfalls einzeln gefertigt und können durch mitgelieferte Kantenprofile von dem Benutzer zusammengesteckt werden. Untereinander werden die Kuben durch ein oder mehrere Klettbänder wie oben beschrieben zusammengehalten.

Bei der dritten Variante wird der Kubus bereits als vierseitiger Kubus gefertigt. Das oder die Klettbänder zur Verbindung der Kuben untereinander werden bei der Produktion direkt oder nachträglich in einem zweiten Produktionsschritt aufgebracht. Der Benutzer muss hier lediglich noch die Kuben aufeinander stellen. Alternativ kann in diesem und den vorhergehenden Varianten das Klettband weggelassen und nur durch Schnapp- und/oder Steckverbindungen, so wie zuvor beschrieben, zusammengehalten werden.

Die besonders bevorzugten Haupttypen der Basisbausteine, sogenannte geometrische Grundkörper, des erfindungsgemäßen Möbel- und Regalbausystems, deren Herstellung und Verwendung, können im Detail wie in den folgenden typischen Ausführungsbeispielen beschrieben werden, ohne die Erfindung damit hinsichtlich des Materials, der Materialstärke oder Abmessungen, der Form des geometrischen Körpers oder der Platte, der Art der Anbringung des Klettbandes, der Benutzung von Schnapp- und/oder Steckverbindungen anstelle von Klettband oder in irgendeiner anderen Weise zu beschränken:

### Beipiel 1

### Der Faltkubus

Es werden vier einzelne EPP Platten mit der Abmessung, L400xB400xT300mm, bevorzugte Materialstärke 25 - 30 mm nach bekannten Methoden gefertigt. Die EPP Platten sind jeweils auf der 300 mm-Seite mit einer 45°-Winkel Gehrung versehen und weisen darin eingeformte Schnappvorrichtungen auf, die nach dem Zusammenfügen der Teile die Stabilität des Kubus unterstützen. Die unterschiedliche Ausformung der Schnappvorrichtungen ist in Zeichnung (4) bildlich dargestellt. Die Vorderkante (400mm-Seite) ist mit einer Gehrung versehen um sie optisch schmäler wirken zu lassen. Nach der Fertigung der EPP-Platten werden diese mit einer Folien- oder Textilunterlage verbunden. Die Unterlage wird auf die eine Seite der Platten geklebt, so dass die einzelnen Platten auf ihrer 300mm-Seite mit dem spitzen Winkel ihrer 45° -Gehrung zusammenstoßen. Dadurch ergibt sich an dem Punkt an dem die Platten sich berühren ein Filmscharnier (A). Das Filmscharnier (A) unterstützt den einfachen Zusammenbau und die Stabilität des Kubus oder der anderen geometrischen Formkörper.

An Stelle der nachträglich aufgebrachten Folien- oder Textilbeschichtung einer oder mehreren Oberflächen zur Erzeugung des Filmscharniers (A), können die einzelnen Platten bereits bei ihrer Fertigung durch eine spezielle Ausführung des Werkzeugs mit einem Filmscharnier aus ihrem eigenen Material oder aber auch einem anderen Material verbunden werden. Nach der Aufbringung der Folien- oder Textilrückens wird das Klettband zur Verbindung der Kuben untereinander aufgebracht. Wechselseitig wird immer ein Kubus mit einem Flausch und der nächste mit einem Hakenrücken versehen oder die Kuben werden mit sogenannten, im Handel erhältlichen "One-Face-Klettbändern" versehen, bei denen Haken und Flausch in einem Band vereint sind. Die Aufbringung des Klettbandes kann vollflächig erfolgen oder nur an einzelnen, bevorzugten Stellen auf der Oberfläche der geometrischen Körper. Bei dem Aufbau eines Kubus werden die Seitenteile in ein 90°-Winkel, also einen rechten Winkel zueinander gebracht und die Schnappvorrichtungen ineinandergedrückt. Dann wird der Kubus mit einer Klettlasche verschlossen (Zeichnung (3c)). Die Kuben können danach direkt miteinander kombiniert, beispielsweise aufeinander gestellt werden und werden dabei durch Steck- oder Schnappverbindungen zusammengehalten. Durch die hohe Haftkraft des Klettbandes werden die Kuben fest miteinander verbunden und geben dem Möbel- oder Regalsystem eine hohe Stabilität.

Ebenso leicht kann man die geometrischen Formkörper auch wieder voneinander trennen, um sie beispielsweise umzugestalten, oder sie wieder abzubauen und woanders aufzustellen. Der Faltkubus lässt sich beliebig oft auf- und abbauen. Es wird lediglich die Klettlasche geöffnet und schon kann man den Kubus flach auseinander falten (Teilabbildungen (2c) u. (3b)).

### Beispiel 2

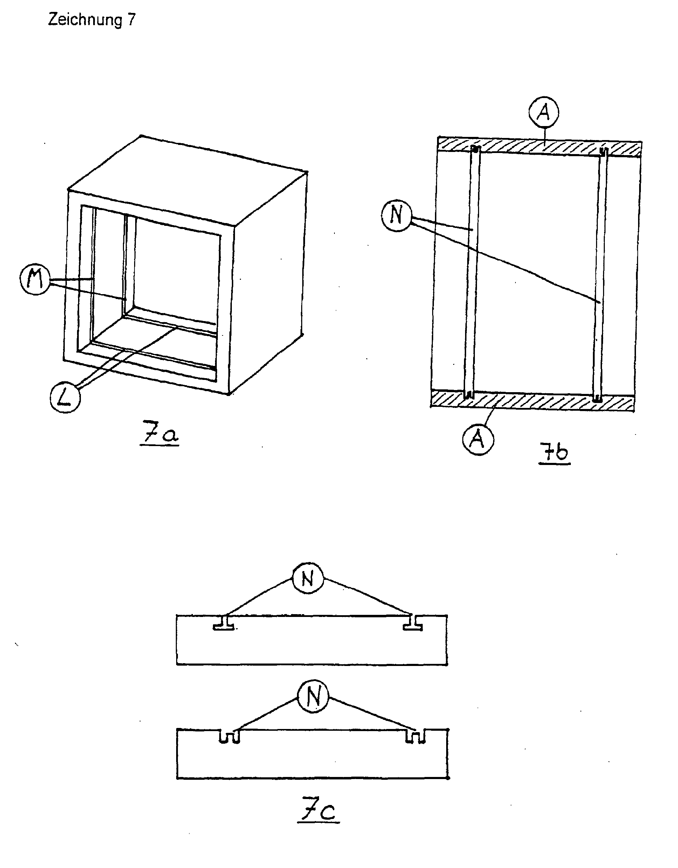

Bei dem Steckkubus (Zeichnung (6a) - (6c)) dieses Beispiels werden vier einzelne EPP-Platten mit den Abmessungen L400xB400xT300mm, Materialstärke 25-30mm gefertigt. Die EPP-Platten sind jeweils auf der 300 mm-Seite mit einer Gehrung im 45° Winkel zur lückenlosen Verbindung der einzelnen Platten versehen. Auf der durch die Gehrung entstehenden, längeren Außenseite ist parallel zu den 300mm-Seiten jeweils eine Aussparung- und Führungsrille für einen Ecksteckverbinder vorgesehen, welcher in den Zeichnungen 6 dargestellt ist. Die Steckverbindung kann aus unterschiedlichen Materialien, wie z. B. Metall, Kunststoff, Holz hergestellt sein. In diesem Ausführungsbeispiel wird Aluminium verwendet. Die EPP-Platten werden jeweils mit ihren Hafttextiloberflächen, z. B. mit Klettband versehen. Dabei erhält immer ein Kubus einen Flauschrücken und der nächste einen Hakenrücken, wie bereits unter Beispiel 1 beschrieben. Die Vorderkante (400mm-Seite) ist mit einer Gehrung versehen um sie optisch schmäler wirken zu lassen. Um die EPP-Platten beispielsweise zu einem Kubus zusammenzufügen werden die Platten mit der Gehrungsseite aneinandergefügt, so dass sich ein rechter Winkel, also ein 90° Winkel ergibt. Dann wird die Ecksteckverbindung eingeschoben. Es ergibt sich sofort eine stabile, rigide, schlüssige Verbindung. Das Ecksteckverbindungselement ist flächenbündig mit der EPP-Platte. Durch die unterschiedliche Ausformung der Eckverbindung können Blenden zur Verdeckung der Eckverbindung der Platten vorgesehen werden, die jedoch die Funktion des Gegenstandes nicht verändern.

### Beispiel 3

Es wird ein Kubus L400xB400xT300mm, Materialstärke 25-30mm komplett aus EPP oder einem anderen Schaum gefertigt. Der Kubus ist beidseitig offen. Die Vorderkanten des Kubus sind mit einer Gehrung versehen um die Seitenwände optisch schmaler erscheinen zu lassen. Der Kubus wird mit einem Hafttextilrücken auf der außenliegenden Oberfläche versehen. Dabei erhält immer ein Kubus einen Flauschrücken und der nächste einen Hakenrücken, wie bereits zuvor beschrieben.

### Beispiel 4

Es wird ein Kubus L500xB500xT500mm, Materialstärke 25-30mm komplett aus EPP oder einem anderen Schaum gefertigt, indem 4 Platten entsprechend miteinander verklebt werden. Der Kubus ist beidseitig offen. Die Vorderkanten des Kubus sind mit einer Gehrung versehen um die Seitenwände optisch schmaler erscheinen zu lassen. Der Kubus weist auf jeder Seite Aluminiumschienen auf, wobei das Stützprofil (N), wie in Zeichnung (8a) gezeigt, so angeordnet ist, dass die Horizontalprofile (O), gemäß Zeichnung (8b) auf den Vertikalprofilen (P) aufliegen und so die von oben wirkenden Kräfte bei Belastung seitlich abgetragen werden. Zur Verbindung mit anderen geometrischen Grundkörpern, sind auf allen vier Seiten des Kubus je zwei Löcher mit Hinterschneidungen vorgesehen, die, wie in den Zeichnungen (9) gezeigt, so vorgesehen sind, dass sie das stabilisierende Metallprofil (N) umgeben, also derart, dass das Stützprofil (N) die kreisförmige Fläche der Steckverbindung maximal, also im Durchmesser, durchschneidet. Zwei oder mehrere Kuben können so durch Steck- oder Schnappverbindungen miteinander verbunden werden.

Ergänzende Produktbeschreibung zu den Beispielen 1 bis 4, die optional sind und eine optische oder auch praktische Aufwertung der Erfindung bedeuten:
- alle Kubentypen können rückseitig mit Platten oder Winkeln zur Stabilisierung ausgestattet werden. Die Platten können aus Holz, Glas, Metall oder aus dem gleichen Material wie der geometrische Grundkörper beschaffen sein.
- alle Kubentypen können rückseitig mit Leuchtmittel ausgestattet werden.
- alle Kubentypen können mit einem Regal-Fuß ausgestattet werden. Diese können zum Transport und zur Lagerung, ähnlich wie die planaren Grundkörper im abgebauten Zustand, ineinandergestapelt werden
- alle Kubentypen können mit Rollen ausgestattet werden.
- alle Kubentypen können durch die Klettverbindung unter eine Ablage aus Holz, Glas oder Metall gehängt werden, z. B. ein Sideboard (Zeichnung (10a)).
- alle Kubentypen können durch die Klettverbindung an eine Fläche aus Holz, Glas oder Metall gehängt werden, z. B. ein Hängeregal (Zeichnung (10b)).

Grundsätzlich können die erfindungsgemäßen geometrischen Grundkörper und die daraus resultierenden Möbel- und Regalbausysteme mit allen erdenklichen Maßnahmen, z. B. durch Anbringung von Zierblenden, Zierleisten, Profilleisten, Kantenschutzleisten, farbigen Überzügen etc. optisch und praktisch aufgewertet werden. Beispielsweise ist es möglich Zierblenden über die Steck- und Schnappverbindungen (Q), die nicht dem Zusammenhalt einzelner geometrischer Grundkörper dienen, zu befestigen.

Beispiele für Regalsysteme, die sich durch die kubischen Grundkörper aufbauen lassen, sind in Zeichnung (11) gezeigt.

Nachfolgend sind einige beispielhafte Einsatzmöglichkeiten und Verwendungen aufgezeigt:
- Mobiles platzsparendes Regal für den Wohnbereich
- Mobiles platzsparendes Regal für den Arbeitsbereich (Büro)
- Mobiles platzsparendes Regal für den Keller
- Mobiler Raumteiler für Wohn- und Arbeitsbereich
- Raumteiler, Regal, Bauelement für Messestände und Ausstellungen
- Raumteiler, Regal, Bauelement für Geschäfte
- Bauelement zur Schaufensterdekoration
- Katzenbaum, Kriechhöhle, Spielregal, Tunnelelement, Bauspielelement, Tumelement für Kinderzimmer, Kindergarten, Kinderbetreuung
- Zeitungsständer, Kunst-Objekt,
- Bartheke, Nachttisch, Beistelltisch, Couchtisch, Sitzbank, Einzelsitz, Gartenmöbel, Gartenregal
- Wohnausstattungselement für psychiatrische Kliniken
- Zellenausstattung für Gefängnisse
- Elemente für die Spieltherapie in therapeutischen Einrichtungen.

Die Erfindung betrifft ferner ein Verfahren zum Aufbau der Möbel- und Regalbausysteme, dadurch gekennzeichnet, dass die stabile, hochbelastbare Verbindung der einzelnen geometrischen Körper dadurch gewährleistet wird, dass die Bauteile mit Schnappungen und Klettbändern oder durch Steck- und/oder Schnappverbinder zu einem stabilen System verbunden werden. Hierzu werden geeignete geometrische Körper miteinander kombiniert, wie dies in der Zeichnung (11) gezeigt ist. Diese Ausführungsform kann darüber hinaus durch alle zuvor genannten Verbindungsmethoden realisiert werden.

Schließlich betrifft die Erfindung auch die Verwendung der geometrischen Grundkörper zum Aufbau eines der Möbels oder Regalsystemes.

Die erfindungsgemäßen geometrischen Grundkörper und die daraus resultierenden Möbel- und Regalbausysteme erlauben eine sichere Benutzung mit hohem Komfort und tragen allen eingangs angeführten Forderungen, auch unter Extrembedingungen, Rechnung.

Die nachfolgenden Zeichnungen zeigen:
- Zeichnung 1: Teilabbildung (1a) zeigt einen Kubus, der an zwei gegenüberliegenden Seiten offen ist und aus vier quadratischen Platten besteht. Die schraffierten Flächen stellen dabei das Klettband (B) dar.
Teilabbildung (1b) zeigt ein Prisma mit zwei gegenüberliegenden offenen Seiten, welches aus drei viereckigen Platten besteht. Die schraffierten Flächen stellen dabei das Klettband (B) dar.
- Zeichnung 2: Teilabbildung (2a) zeigt die Stapelung von 4 Kuben im zerlegten Zustand, wie es zur Lagerung oder Transport erforderlich ist.
Teilabbildung (2b) zeigt wie die vier Flächen durch ein Filmscharnier (A), schraffiert dargestellt, miteinander verbunden werden; die Fläche (C) ist z. B. ein expandierbarer Schaum wie EPP, wobei die Seitenränder (Kanten) (D) im Winkel von 45° abgeschrägt sind
Teilabbildung (2c) zeigt wie der Kubus zusammengebaut wird, indem die Seitenränder (Kanten) (D) gegeneinander geklappt werden.
Teilabbildung (2d) zeigt einen Kubus im planaren, abgebauten Zustand mit einer Rückwand.
- Zeichnung 3: Teilabbildung (3a) zeigt ein Klettband (B), welches z. B. als Filmscharnier eingesetzt werden kann in Form eines "One-Face-Klettbands" mit Haken (E) und Flausch (F).
Teilabbildung (3b) zeigt ein Klettband (B), welches z. B. als Filmscharnier eingesetzt werden kann und Haken (E) und Flausch (F) auf verschiedenen Bändern aufweist
Teilabbildung (3c) zeigt die Lasche des Klettbandes (B) mit flächenbündigem Abschluß.
- Zeichnung 4: zeigt zwei benachbarte Flächen (C) mit im 45° Winkel abgeschrägten Kanten (D) mit Schnappung (G), die beim Zusammenklappen, während des Aufbauens zu einer zusätzlichen Verzahnung führt
- Zeichnung 5: zeigt einige Formbeispiele von möglichen Schnappungen (G).
- Zeichnung 6: Teilabbildung (6a) zeigt einen Ausschnitt eines kubischen Grundkörper, der auf jeder Platte eine Nut (H) auf der äußeren Oberfläche aufweist, die die gesamte Platte parallel zum Filmschamier (A) durchquert; in diese Nut (H) kann nach dem Aufbau ein Steckprofil (J) aufgesteckt oder ein Einsteckwinkel (K) eingeschoben werden.
Teilabbildung (6b) zeigt schematisch den Aufbau mit Steckprofil (J).
Teilabbildung (6c) zeigt die zusammengebaute Form mit Steckprofil (J)

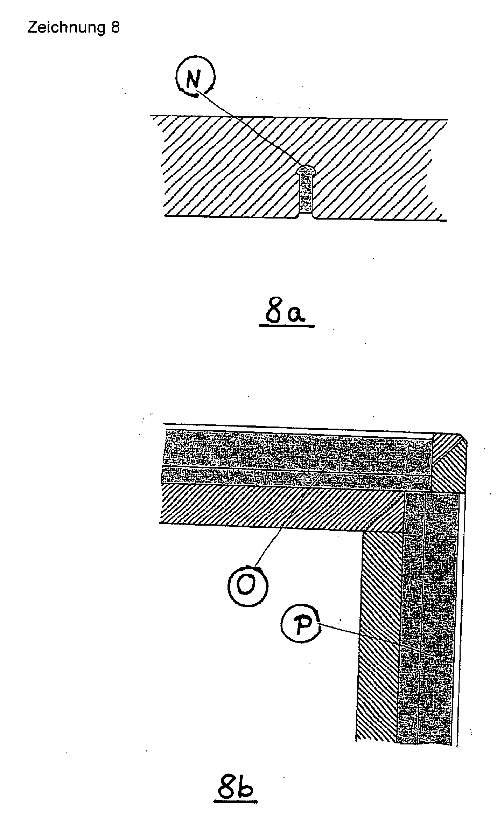

- Zeichnung 7: Teilabbildung (7a) zeigt einen Grundkörper, bei dem in oder auf jeder Platte ein oder mehrere Horizontalprofile (L) sowie entsprechende Vertikalprofile (M) auf der innenliegenden Oberfläche, parallel zur Stirnseite und senkrecht zu den Filmscharnieren, oder an dem Rand der Stirnseiten der äußeren oder innenliegenden Oberfläche angeordnet sind.
Teilabbildung (7b) zeigt Stützprofile (N), die etwas entfernt vom äußeren Rand angeordnet sind und sich auf der innenliegenden Oberfläche senkrecht zum Filmscharnier (A) befinden.
Teilabbildung (7c) diese Stützprofile (N) haben vorzugsweise eine T- oder U-Form und durchqueren die gesamte Platte.

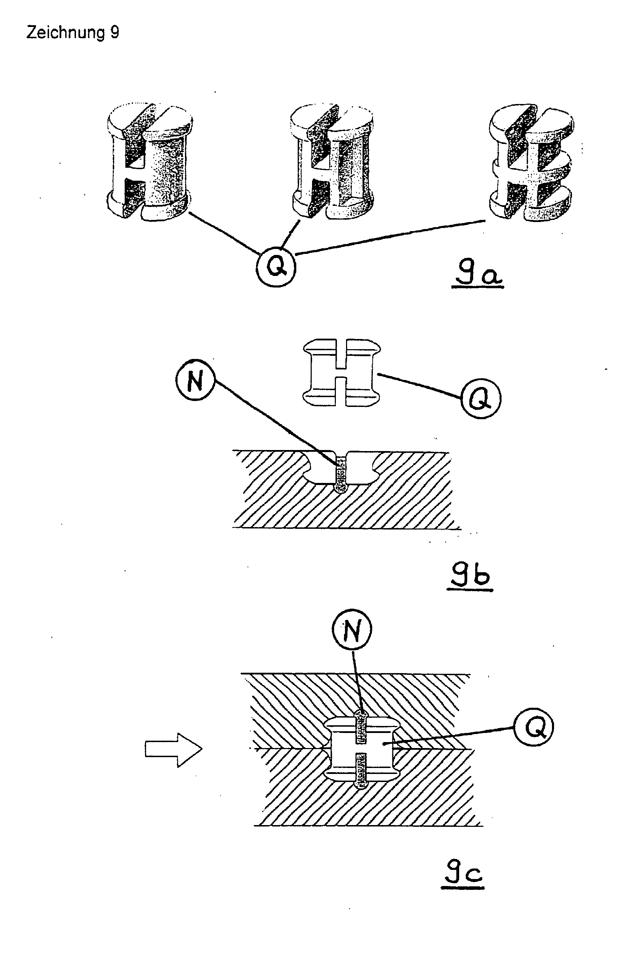

- Zeichnung 8: Teilabbildung (8a) zeigt einen Ausschnitt eines festen geometrischen Grundkörpers, der herstellerseits verklebt ist und über ein eingestecktes Metallprofil als Stützprofil (N) verfügt.
Teilabbildung (8b) zeigt die Stabilisierung eines zweiseitig offenen Kubus, wo die Horizontalprofile (O) auf den Vertikalprofilen (P) aufliegen und so die von oben wirkenden Kräfte bei Belastung seitlich abtragen.

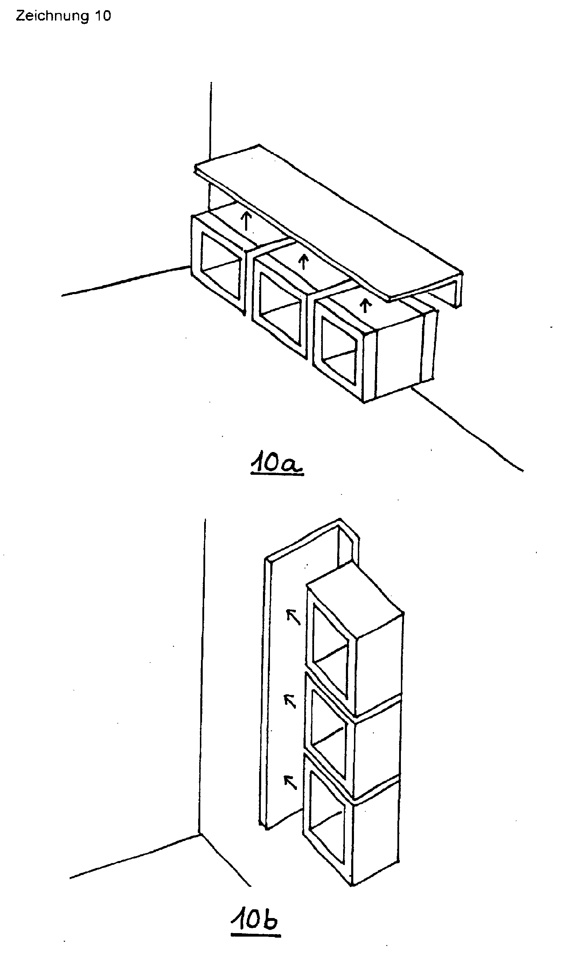

- Zeichnung 9: Teilabbildung (9a) zeigt eine andere Ausführungsform, bei der auf das Klettband verzichtet wird und stattdessen Schnapp- oder Steckverbinder verwendet werden, wobei typische Formen von Schnapp- und Steckverbindem in der Zeichnung zu sehen sind,
Teilabbildung (9b) zeigt, wie die Schnapp- oder Steckverbindungen (Q) per Hand in die vorgesehenen Löcher mit Hinterschneidungen (R) eingedrückt werden können.
Teilabbildung (9c) zeigt die zusammengefügte Variante zweier benachbarter Flächen von zwei geometrischen Grundkörpern mittels Steckverbindung (Q).

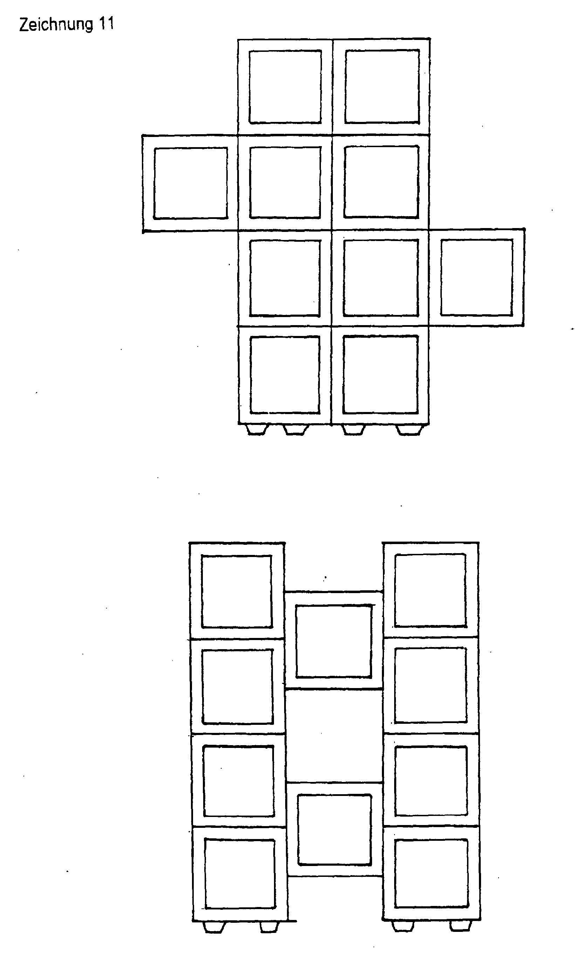

- Zeichnung 10: Teilabbildung (10a) zeigt wie ein Regalsystem aus Kuben durch die Klettverbindung unter eine Ablage aus Holz, Glas oder Metall gehängt werden kann.
Teilabbildung (10b) zeigt wie ein Regalsystem aus Kuben durch die Klettverbindung seitlich an eine Fläche aus Holz, Glas oder Metall gehängt werden kann.
- Zeichnung 11: Beispiele für Regalbausysteme, am Beispiel von kubischen geometrischen Körpern, die miteinander kombiniert wurden

Die Zeichnungen stellen lediglich Beispiele dar, welche die Erfindung beschreiben, aber in ihrer Gesamtheit nicht begrenzen oder einschränken sollen.

## Patentansprüche

1. Möbel- und Regalbausystem zur freien Gestaltung von Mobiliar, **dadurch gekennzeichnet, dass** Möbel- und/oder Regalformen durch Platten aufgebaut werden, die über Steckverbindungen (Q) oder über Klettbänder (B) und Stecker (Q) stabil zusammengefügt werden, ohne das es der Zuhilfenahme von weiteren Stabilisatoren oder starren Befestigungsmaterialen, wie z. B. Schrauben, Nägeln, Dübeln oder dergleichen aus Holz, Metall, Plastik oder sonstigen geeigneten Materialien bedarf.

2. Möbel- und Regalbausystem zur freien Gestaltung von Mobiliar gemäß Anspruch 1, **dadurch gekennzeichnet, dass** die Platten, die über Klettbänder (B) und besonders ausgestaltete Ränder/Kanten (D) zu geometrischen Grundkörpern stabil zusammengefügt werden, zusätzlich an ihren Rändern Schnappungen (G) aufweisen, die beim Aufbau ineinander greifen und eine zusätzliche Verzahnung ergeben.

3. Geometrischer Grundkörper zum Aufbau eines Möbel- oder Regalsystem zur freien Gestaltung von Mobiliar, **dadurch gekennzeichnet, dass** der geometrische Grundkörper durch Platten, die über Steckverbindungen (Q) oder über Klettbänder (B) und Stecker (Q)stabil stabil zusammengefügt werden, ohne das es der Zuhilfenahme von anderen starren Befestigungsmaterialen, wie z. B. Schrauben, Nägeln, Dübeln oder dergleichen aus Holz, Metall, Plastik oder sonstigen Materialien bedarf.

4. Geometrischer Grundkörper zum Aufbau eines Möbel- oder Regalsystem nach Anspruch 3, **dadurch gekennzeichnet, dass** der geometrische Grundkörper rigide ist und über Schnapp- und/oder Steckverbindungen (Q) stabil mit anderen Grundkörpem zusammengefügt stabil zusammengefügt wird, ohne das es der Zuhilfenahme von weiteren starren Befestigungsmaterialen, wie Schrauben, Nägeln, Dübeln oder dergleichen aus Holz, Metall, Plastik oder sonstigen geeigneten Materialien bedarf.

5. Geometrischer Grundkörper nach Anspruch 3 und/oder Anspruch 4, **dadurch gekennzeichnet, dass** der geometrische Grundkörper ein Kubus ist.

6. Geometrischer Grundkörper nach Anspruch 3 und/oder Anspruch 4, **dadurch gekennzeichnet, dass** der geometrische Grundkörper ein Prisma oder ein Rechtkant ist.

7. Geometrischer Grundkörper zum Aufbau eines Möbel- oder Regalsystem nach Anspruch 4, **dadurch gekennzeichnet, dass** der rigide geometrische Grundkörper durch besonders ausgestaltete Ränder/Kanten (D) mit Schnappungen (G) stabil zusammengefügt wird, ohne das es der Zuhilfenahme von weiteren starren Befestigungsmaterialen, wie Schrauben, Nägeln, Dübeln oder dergleichen aus Holz, Metall, Plastik oder sonstigen geeigneten Materialien bedarf.

8. Möbel- und Regalbausystem oder geometrischer Grundkörper gemäß einem oder mehreren der vorhergehenden Ansprüche, **dadurch gekennzeichnet, dass** der jeweilige geometrische Grundkörper, der zum Aufbau eines komplexen Möbel- oder Regalbausystems eingesetzt wird, auf jeder Platte eine oder mehrere Nute (H) auf der äußeren Oberfläche besitzt, wobei in diese Nute (H) nach dem Aufbau eines geometrischen Grundkörpers, ein Steckprofil (J) oder ein Einsteckwinkel (K) zur besonderen Stabilisierung des Grundkörpers und oder der Kanten eingeschoben oder aufgesteckt werden kann.

9. Möbel- und Regalbausystem oder geometrischer Grundkörper gemäß einem oder mehrerer der vorhergehenden Ansprüche, **dadurch gekennzeichnet, dass** der jeweilige geometrische Grundkörper, der zum Aufbau eines komplexen Möbel- oder Regalbausystems eingesetzt wird, auf jeder Platte ein oder mehrere Horizontalprofile (L) sowie ein oder mehrere entsprechende Vertikalprofile (M) aufweist, so dass die Horizontalprofile die auf ihnen lastende Kraft auf die Vertikalprofile abtragen können, wodurch eine besondere Stabilisierung des Grundkörpers und eine hohe Gewichtsbelastung ermöglicht wird.

10. Möbel- und Regalbausystem oder geometrischer Grundkörper gemäß einem oder mehreren der vorhergehenden Ansprüche, **dadurch gekennzeichnet, dass** der jeweilige geometrische Grundkörper, der zum Aufbau eines komplexen Möbel- oder Regalbausystems eingesetzt wird, auf jeder Platte ein oder mehrere Stützprofile (N) aufweist, wodurch eine besondere Stabilisierung des Grundkörpers zur hohen Gewichtsbelastbarkeit erreicht wird.

11. Möbel- und Regalbausystem oder geometrischer Grundkörper gemäß einem oder mehreren der vorhergehenden Ansprüche, **dadurch gekennzeichnet, dass** der jeweilige geometrische Grundkörper, der zum Aufbau eines komplexen Möbel- oder Regalbausystems eingesetzt wird, auf jeder Platte ein oder mehrere Stützprofile (N) in Form von Horizontal-(O) und Vertikalprofilen (P) aufweist, wobei die Horizontalprofile (O) so auf den Vertikalprofilen (P) aufliegen, dass die von oben wirkenden Kräfte bei Belastung seitlich abgetragen werden können und so eine besonders hohe Gewichtsbelastbarkeit erreicht wird.

12. Möbel- und Regalbausystem oder geometrischer Grundkörper gemäß einem oder mehreren der vorhergehenden Ansprüche, **dadurch gekennzeichnet, dass** der jeweilige geometrische Grundkörper, der zum Aufbau eines komplexen Möbel- oder Regalbausystems eingesetzt wird, auf jeder Seite zwei oder mehrere Öffnungen aufweist, in die die Schnapp- und/oder Steckverbindungen eingesteckt werden können, die es ermöglichen, die geometrischen Grundkörper auf allen Seiten aneinander zu befestigen und beliebig zusammenzustecken.

13. Möbel- und Regalbausystem oder geometrischer Grundkörper gemäß einem oder mehreren der vorhergehenden Ansprüche, **dadurch gekennzeichnet, dass** die Öffnungen für die Schnapp- und Steckverbindungen so vorgesehen sind, dass sie das stabilisierende Metallprofil (N) umgeben, vorzugsweise derart, dass das Stützprofil (N) die kreisförmige Fläche der Steckverbindung maximal, also im Durchmesser, durchschneidet.

14. Möbel- und Regalbausystem oder geometrischer Grundkörper gemäß der einem oder mehreren der vorangehenden Ansprüche, **dadurch gekennzeichnet, dass** die Platten aus geschäumten Kunststoffmaterialien gefertigt sind.

15. Verfahren zur Herstellung der Möbel- und Regalbausysteme gemäß einem oder mehreren der vorhergehenden Ansprüche, **dadurch gekennzeichnet, dass** die stabile, hochbelastbare Verbindung der einzelnen geometrischen Körper gewährleistet wird, indem die Bauteile mit Klettbändem (B) und Steckverbindungen (Q) zu einem stabilen System verbunden werden, wobei geeignete geometrische Körper, wie in Zeichnung (11) gezeigt, miteinander kombiniert werden.
